# EUROPEAN PATENT APPLICATION

(11) **EP 2 378 115 A2**
(43) Date of publication of application: **19.10.2011**
(21) Application number: 11161814.6
(22) Date of filing: 11.04.2011
(51) Int. Cl.: F03D 7/04, F03D 7/02

(54) **Configurable winglet for wind turbine blades**

(30) Priority: 15.04.2010 US 761150
(71) Applicant: General Electric Company, Schenectady, NY 12345 (US)
(72) Inventor: Nanukuttan, Biju, 560066, Bangalore, Karnataka (IN); Dey, Subhrajit, 560066, Banglaore, Karnataka (IN); Haans, Wouter, 2593HL, The Hague (NL); Loganathan, Jaikumar, 560066, Bangalore, Karnataka (IN)
(74) Representative: Bedford, Grant Richard

(57) **Abstract**

A wind turbine (10) includes a plurality of rotor blades (22) for converting wind energy to rotational energy. The rotor blades (22) have winglets (32) that are configurable. A sensor (48) senses a parameter and generates a sensed signal indicative of the parameter. A processor (50) receives the sensed signal for generates an actuator signal in response thereto. An actuator (43) is associated with each of the winglets (32) for configuring the winglets (32) in response to the actuator signal.

## Description

The subject matter described herein relates generally to wind turbines, and, more specifically, to wind turbine rotor blades having configurable winglets.

A wind turbine typically has a tower supported at a base with a nacelle positioned at the upper end of the tower. At the nacelle a rotor hub is connected to a shaft and has a plurality of rotor blades mounted thereto. The shaft is rotated by the rotation of the rotor hub, which is itself rotated as a result of wind acting on the rotor blades. This rotational energy is communicated through a gearbox to a generator, which generates electricity.

The rotor blades have a generally elongated airfoil shape with the outermost portions of the rotor blades being fixed in the same plane as the rest of the blades or positioned out of plane. The fixed turned portion is known as a winglet. Under certain operating conditions, this fixed winglet improves operating efficiency of the wind turbine when compared to rotor blades with the outermost portions thereof fixed in the same plane as the rest of the blade.

According to one aspect of the invention, a rotor blade of a wind turbine has a winglet that is configurable in response to a sensed parameter.

According to another aspect of the invention, a wind turbine includes a plurality of rotor blades for converting wind energy to rotational energy. The rotor blades have winglets that are configurable. The wind turbine includes a sensor for sensing a parameter and generating a sensed signal indicative of the parameter. The wind turbine further includes a processor receptive to the sensed signal for generating an actuator signal in response thereto. The wind turbine also includes an actuator associated with each of the winglets for configuring the winglets in response to the actuator signal.

According to yet another aspect of the invention, a method of configuring a winglet of a rotor blade at a wind turbine includes sensing a parameter and configuring the winglet in response to the parameter.

According to still another aspect of the invention, a method of configuring winglets of rotor blades at a wind turbine includes at low winds orienting the winglets in about the same plane as the rest of the respective rotor blades, and at high winds orienting the winglets away from the wind turbine, where the low winds have a wind speed that is less than a wind speed of the high winds.

According to another aspect of the invention a method of configuring winglets of rotor blades at a wind turbine includes at low winds orienting each of the winglets towards the wind turbine, and at high winds orienting the winglets away from the wind turbine, where the low winds have a wind speed that is less than a wind speed of the high winds.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side elevation view of a wind turbine;
FIG. 2 is a diagrammatic partial front elevation view of a rotor blade of the wind turbine with a winglet in a fully extended configuration;
FIG. 3 is a schematic block diagram of the control system of the wind turbine;
FIG. 4 is a diagrammatic partial front elevation view of a rotor blade of the wind turbine with the winglet in a configuration employing a sweep angle;
FIG. 5 is a diagrammatic partial front elevation view of a rotor blade of the wind turbine with the winglet in a configuration employing a twist angle;
FIG. 6 is a diagrammatic partial side elevation view of a rotor blade of the wind turbine with the winglet in a configuration employing a cant angle;
FIG. 7 is a diagrammatic partial front elevation view of a rotor blade of the wind turbine with the winglet in a retracted configuration;
FIG. 8 is a plurality of plots showing varied pitch angles of a blade having the winglet for Cp against TSR;
FIG. 9 is a plot of the maximum Cp across the TSR domain obtained at different pitch angles as derived from FIG. 8;
FIG. 10 is a plurality of plots showing the maximum Cp across the TSR domain for a blade without a winglet, a blade with a fixed winglet, and a blade with the winglet of the invention; for tower strike constraint out-of-scope;
FIG. 11 is a plurality of plots showing the maximum Cp across the TSR domain for a blade without a winglet, a blade with a fixed winglet, and a blade with the winglet of the invention; for tower strike constraint in-scope; and
FIG. 12 is plurality of plots showing Cp, TSR, generator RPM, pitch, and power; all as a function of wind speed for a blade having the winglet of the invention.

The detailed description explains embodiments of the invention, together with advantages and features, by way of example with reference to the drawings.

In general, a wind turbine includes a plurality of rotor blades for converting wind energy to rotational energy. Exemplary embodiments include the rotor blades having winglets that are configurable. The configuration of the winglets being selected to attain a desired performance of the wind turbine. The configuration of the winglets can be modified to maintain the desired performance in changing environmental and/or operating conditions. Also, the configuration of the winglets can be modified to attain a different desired performance of the wind turbine. Improved operation of the wind turbine can be achieved with configurable winglets.

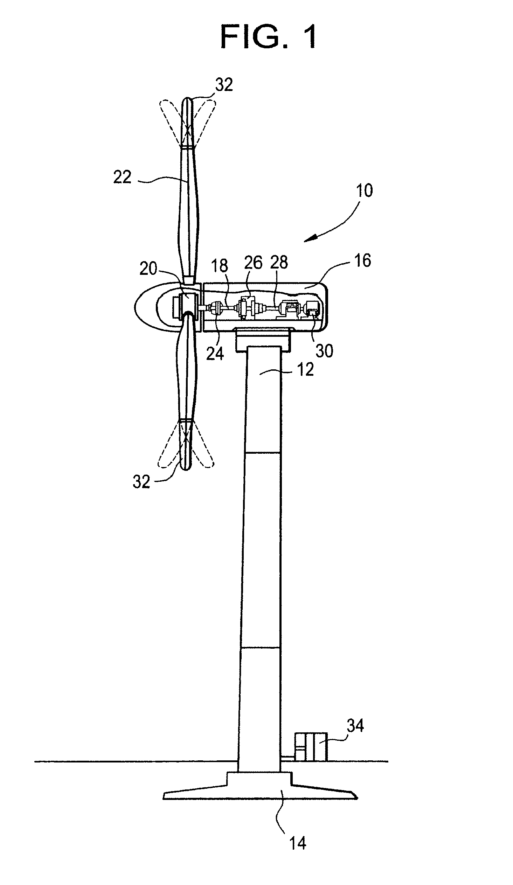

Referring to FIG.1, a wind turbine is shown generally at 10. The wind turbine 10 has a tower 12 supported at a base 14. A nacelle 16 is positioned at the upper end of the tower 12 with a rotor hub shaft 18 extending therefrom. A rotor hub 20 is disposed at one end of the shaft 18 and has a plurality of rotor blades 22 mounted thereto. A brake 24 is provided on the rotor hub shaft 18 to stop rotation of the rotor blades 22 when desired. While the brake 24 is shown at the low-speed shaft it is also know to locate the brake at the high-speed shaft. The other end of the rotor hub shaft 18 interfaces with an input of a gearbox 26. One end of a generator shaft 28 interfaces with an output of the gearbox 26, which is configured to rotate the generator shaft 28 at a greater speed than that of the rotor hub shaft 18 at the input. The other end of the generator shaft 28 drives a generator 30, which is connected electrically (not shown) to a transformer 34. Alternatively, a direct dive wind turbine may be employed.

The rotor blades 22 have a generally elongated airfoil shape to be efficiently driven by wind. When the rotor blades 22 are rotated by the wind the rotor hub shaft 18 will rotate therewith. The gearbox 26 steps up this rotation speed to rotate the generator shaft 28 at a greater speed for driving the generator 30. Electrical power generated by the generator 30 is provided to the transformer 34 for use in providing electric power.

An outermost portion of the blades 22, referred to herein as winglets 32, are capable of changing their configuration. Varied winglet configurations improve operating efficiency of the wind turbine 10. For example, improved energy capture in low winds and reduced noise operation in high winds are achievable. The configuration of the winglets 32 affects the flow and aerodynamic forces on the blades 22.

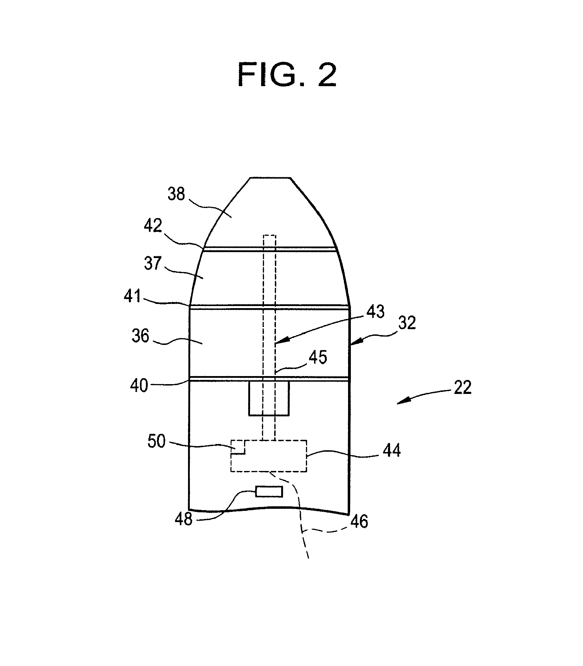

Referring to FIG. 2, the winglets 32 are capable of changing their configuration by morphing or transforming their shape, e.g., varying a trailing edge, rotation about an axis, elongation, camber change, boundary layer control, and altered geometry. A winglet 32 is illustratively shown with three adjustable portions 36 - 38 that are separated by joints 40 - 42. The winglet portions 36 - 38 may be composed of rigid material similar to the composition of the remainder of a blade 22. Alternatively, the winglet 32 is composed of a flexible material that is sufficiently pliable to allow for changing configuration of the winglet 32, whereby discrete portions are not necessary. The winglet portions 36 - 38 are positioned in response to at least one actuator 43 that includes at least one actuator arm 45 driven by at least one actuator driver 44. The actuator 43 is powered by and is operated in response to electrical signals received at a signal line 46. Electrical power could be provided by the generator 30 and may need to be conditioned before being provided to the actuator 43. The actuator 43 is an electric actuator, but could be pneumatic or otherwise. The at least one actuator 43 can change height, sweep angle, cant angle, toe angle, twist angle, and/or radius of the winglet 32 relative to the blade 22.

Alternatively, the winglet 32 is comprised of a morphing material or another smart material in composite structures, such as a shape memory alloy or a shape memory polymer, wherein the configuration of the winglet 32 can be changed when an actuation is applied to selected areas to achieve the desired configuration. The winglet 32 formed of a shape memory alloy such as a nickel-titanium alloy is initially deformed to be in an extended position. Upon application of heat by the actuator 43 at the particular transition temperature of the shape memory alloy, the winglet 32 which is initially in a retracted (i.e., a non-deployed) position morphs to a deployed position. In addition to nickel-titanium alloy the shape memory alloy may be comprised of other alloys such as provided in the following Table:

| Alloy | Composition | Transformation Temperature Range °C. | Transformation Hysteresis °C. |
|---|---|---|---|
| AgCd | 44∼49 at % Cd | -190 ∼ -50 | ∼ 15 |
| AuCd | 46.5 - 50 at % Cd | 30 ∼ 100 | ∼15 |
| CuA1Ni | 14 ∼ 14.5 Wt % A1 | -140∼100 | ∼ 35 |
| | 3 - 4.5 Wt % Ni | | |
| CuSn | ∼15 at % 5n | -120 ∼ 30 | |
| CuZn | 38.5 ∼ 41.5 Wt % Zn | -180∼-10 | ∼10 |
| CuZn X | few Wt % X | -180∼200 | ∼ 10 |
| (X = Si Sn A1) | | | |
| InTi | 18-23 at % T1 | 60 ∼ 100 | ∼4 |
| NiAl | 36 ∼ 38 at % A1 | -180 ∼ 100 | ∼10 |
| NiTi | 49∼51 at % Ni | -50∼110 | -30 |
| FePt | ∼ 25 at % Pt | ∼-130 | ∼4 |
| MnCu | 5∼35at % Cu | -250∼180 | -25 |
| FeMnSi | 32 Wt % Mn | -200 ∼150 | ∼100 |
| Fe--Cr--Ni--Co--Mn—Si | ,- | -- -100∼300 | ∼ 50 |
| Fe--Cr--Ni--Mn--Si | ,- | -- -100 ∼ 300 | ∼ 50 |

It will also be appreciated that other types of electromechanical actuation may be used.

Shape memory polymers may also be used; they are polymeric smart materials that have the ability to return from a deformed state to their original shape induced by an external stimulus or trigger, such as temperature change. In addition to temperature change, the shape memory effect of shape memory polymers can also be triggered by an electric or magnetic field, light or a change in pH. As with polymers in general, shape memory polymers also cover a wide property-range from stable to biodegradable, from soft to hard, and from elastic to rigid, depending on the structural units that constitute the shape memory polymer. Shape memory polymers include thermoplastic and thermoset (i.e., covalently cross-linked) polymeric materials. Shape memory polymers are presently able to store up to three different shapes in memory. Suitable polymeric materials are provided in the Table below.

| Hard Phase | Crosslinker | Tᵣ(°C) | R_{f}(5)(%) | R_{f}(5)(%) |
|---|---|---|---|---|
| PET | Glycerol/dimethyl5- sulfoisopthalate | 11-30 | 90-95 | 60-70 |
| PET | Malcic anhydride | 8-13 | 91-93 | 60 |
| AA/MMA copolymer | N,N'-methylene-bis- acrylamide | 90 | -- | 99 |
| MMA/N-vinyl-2 pyrrolidone | Ethyleneglycol | 90 | -- | 99 |
| | Dimethacrylate | | | |
| PMMA/N-vinyl-2- pyrrolidone | Ethyleneglycol | 45,100 | -- | 99 |
| | Dimethacrylate | | | |
| | | | | |

The use of shape memory polymer or shape memory alloy depends on the specific application, as they differ by their glass transition or melting transition from a hard to a soft phase, which is responsible for the shape memory effect. In shape memory alloys Martensitic/Austenitic transitions are responsible for the shape memory effect. In most applications shape memory polymers are desired over shape memory alloys as they have a high capacity for elastic deformation (e.g., up to 200%), lower cost, lower density, a broad range of application temperatures which can be tailored, easy processing, and potential biocompatibility and biodegradability.

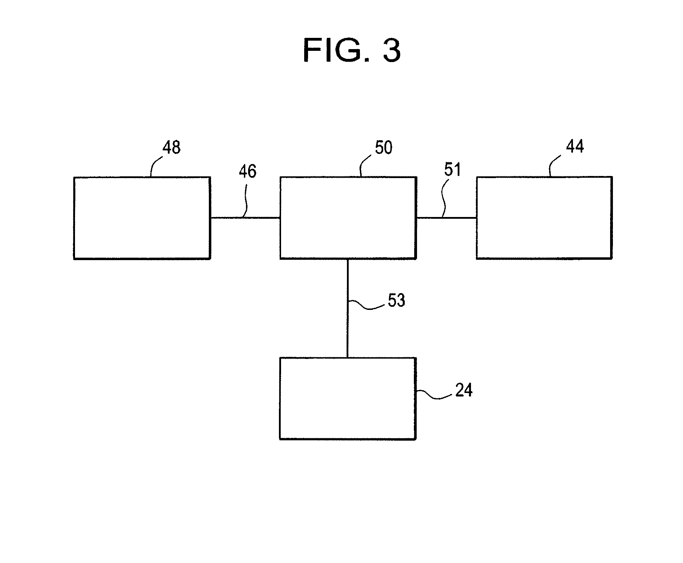

Referring also to FIG. 3, the desired configuration of the winglet 32 is calculated in response to sensed parameters, such as wind speed, acoustic, load, acceleration, rotor speed (RPM), rotor torque, generator speed (RPM), and/or generator torque. A sensor 48 is located depending upon the variable being sensed. For example, acoustics, loads, and acceleration may be better sensed by sensors at the blade 22. Wind speed could be sensed elsewhere at the wind turbine 10 or even remote therefrom. Sensed signals from the sensors 48 are transmitted, via the signal line 46 or otherwise (e.g., wirelessly or another signal line), to a processor 50 associated with the actuator diver 44. The processor 50 processes this information to determine the desired configuration of the winglet 32 and communicates the proper electrical signals via a signal line 51 to the actuator driver 44 for configuring the winglet 32. While real-time configuring of the winglet 32 is anticipated, certain conditions may require that the rotation of the blades 22 be stopped or slowed until the winglets 32 are reconfigured (such as in high wind conditions), whereby the processor 50 would communicate a signal to apply the brake 24, via a signal line 53.

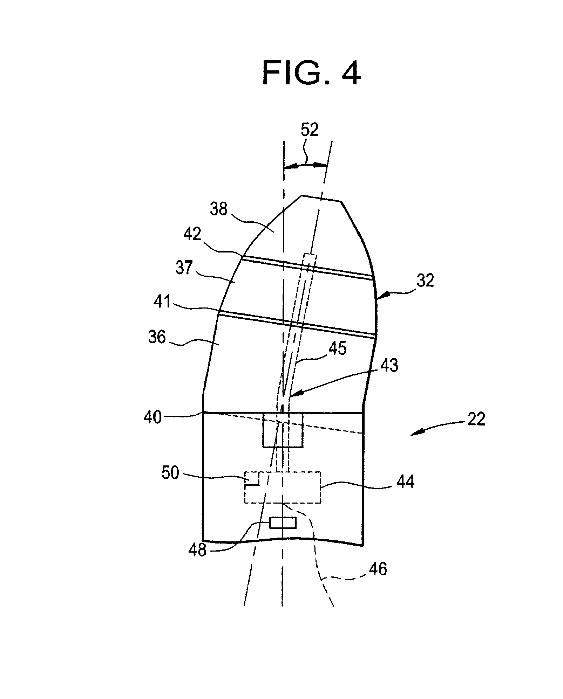

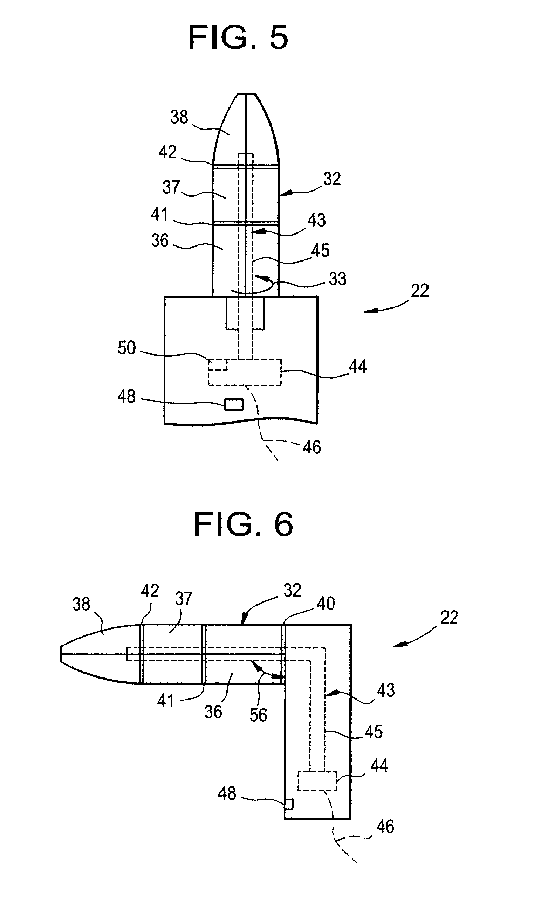

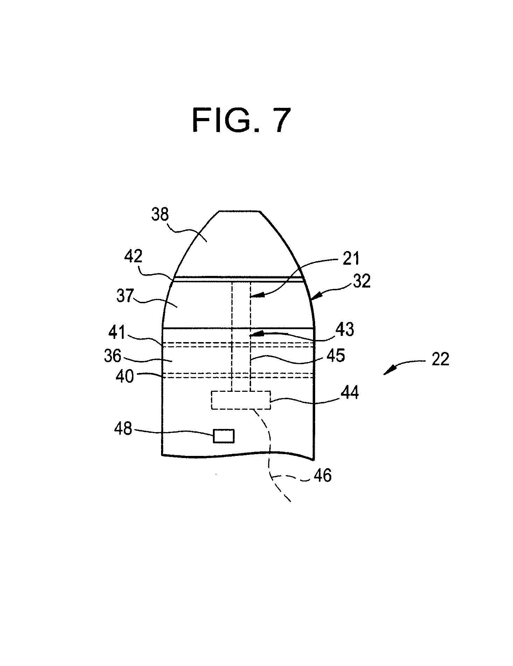

Several exemplary configurations are illustrated in FIGs. 4 - 7. FIG. 4 shows the winglet 32 configured at a sweep angle designated by line 52. While portions 36 - 38 are all positioned at the same sweep angle, each of the portions could be position at different sweep angles. The sweep can be forward or back and is useful in reducing drag. FIG. 5 shows the winglet 32 configured with a twist angle. The twist angle of the winglet 32 is out of the plane of the blade 22, as indicated by an arrow 33 (which is intended to show the winglet 32 twisting relative to the remainder of the blade 22 while continuing to be axially aligned therewith). While portions 36 - 38 are all positioned at the same twist angle, each of the portions could be position at different twist angles. The twist angle of the winglet 32 reduces an angle of incidence, and therefore causes a lower angle of attack. FIG. 6 shows the winglet 32 configured at a cant angle designated 56. While portions 36 - 38 are all positioned at the same cant angle, each of the portions could be positioned at different cant angles. The cant angle of the winglet 32 is about the plane of the blade 22. Cant angles in this example are adjustable between 0 and 90 degree. The cant angle of the winglet and the size and shape of the winglet, are critical for performance. For example, the curvature radius between the winglet 32 and the remainder of the blade 22 can impact efficiency. The canted winglets 32 decrease the tip vortex, which is created by the pressure difference on the suction side of the blade 22 that accelerates the flow at the tip of the blade 22 in direction perpendicular thereto. Thusly decreasing downwash on the center of the blade 22 where the aerodynamic forces are large. FIG. 7 shows the winglet 32 configured at a reduced height or length. The portions 36 - 38 are shown as a telescoping mechanism allowing various lengths to be configured. Other configurations can be obtained as required, including changing the overall shape of the winglet 32. Further any combinations of configurations can be employed.

By way of example the twist angle discussed with reference to FIG. 5, may be accomplished using a longitudinal spar as the actuator arm 45 extending from within the blade 22 to the winglet 32. The actuator driver 44 comprises a torsionally flexible passive torque tube of shape memory alloy, which is connected to the blade spar 45 near the winglet 32 and at least one thermoelectric device that activates the shape memory alloy by applying heat, which causes the torque tube to twist under the induced torque. This twisting causes the longitudinal spar 45 to rotate, which causes the winglet 32 to twist to a desired position. The winglet 32 can be returned to its original (or non-activated) position by removing the heat, which can be accomplished by deactivation of the thermoelectric device and application of a heat sink to draw the heat away from the shape memory alloy. The heat sink, while not shown, may be internal or external to the blade 22.

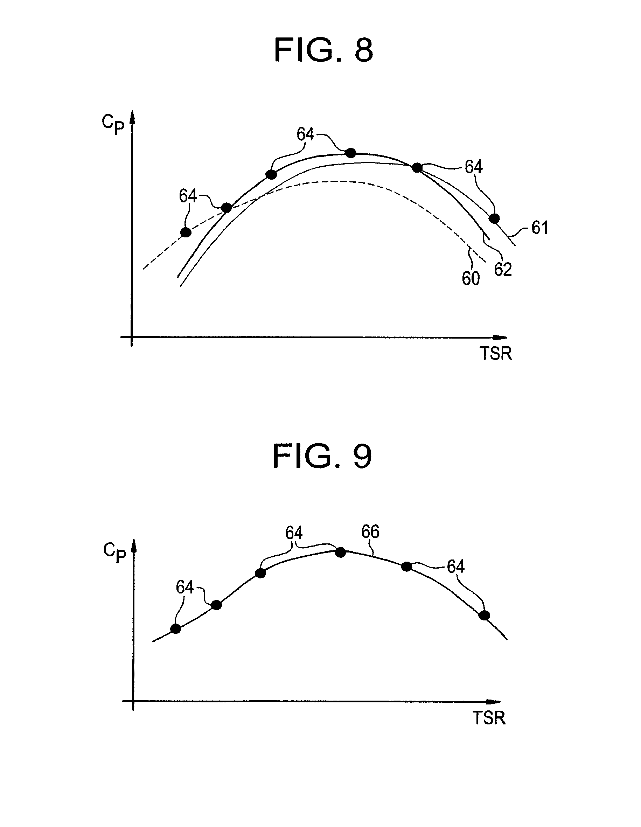

Referring to FIG. 8, plots 60 - 62 show varied pitch angles of the blade 22 having the winglet 32 for Cp (a ratio of power from the wind turbine 10 and power available from the wind) against TSR (tip speed ratio, a ratio of rotational speed at the tip of the blade 22 and the actual speed of the wind). Points 64 indicate the maximum Cp across the TSR domain, wherein the maximum Cp is obtained at different pitch angles. Accordingly, improved results can be achieved with a varied pitch angle rather than a fixed angle. Referring also to FIG. 9, a plot 66 of the maximum Cp across the TSR domain obtained at different pitch angles as derived from FIG. 8 is shown.

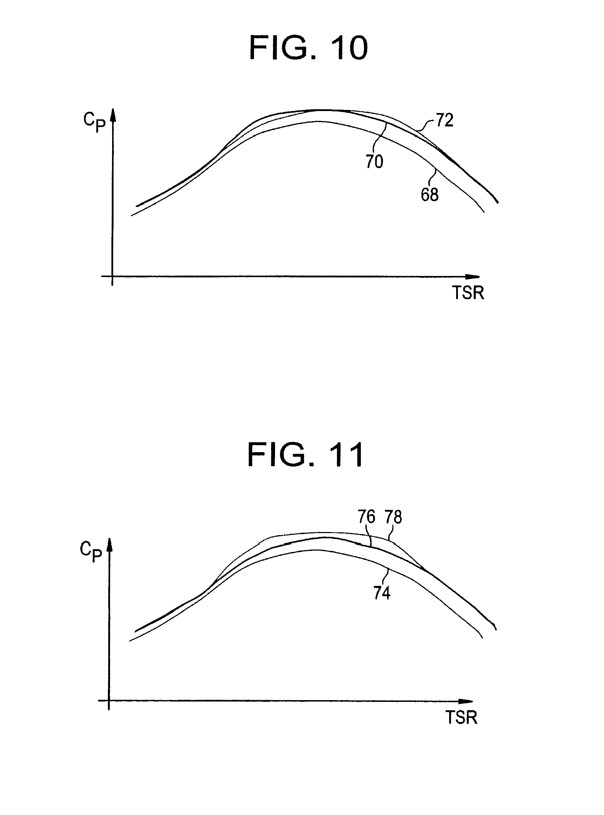

Referring to FIG. 10, a plot 68 shows the maximum Cp across the TSR domain for a blade without a winglet (not shown), a plot 70 shows the maximum Cp across the TSR domain for a blade with a fixed winglet (not shown), and plot 72 shows the maximum Cp across the TSR domain for the blade 22 having the winglet 32. The plots 68, 70, and 72 are for a tower strike constraint out-of-scope. When out-of-scope, the winglet 32 is to be oriented upstream on the pressure side, i.e., away from the tower 12, in the presence of high winds. The plot 72 for the winglet 32 provides the greatest maximum Cp across the TSR domain, as compared to plots 68 and 70. Referring also to FIG. 11, a plot 74 shows the maximum Cp across the TSR domain for a blade without a winglet (not shown), a plot 76 shows the maximum Cp across the TSR domain for a blade with a fixed winglet (not shown), and plot 78 shows the maximum Cp across the TSR domain for blade 22 having the winglet 32. The plots 74, 76, and 78 are for a tower strike constraint in-scope. When in-scope, the winglet 32 is to be oriented downstream on the suction side, i.e., towards the tower 12, in the presence of low winds. Orienting the winglet 32 downstream on the suction side is generally more efficient than orienting the winglet 32 upstream on the pressure side. As in above example (FIG. 10), the plot 78 for the winglet 32 also provides the greatest maximum Cp across the TSR domain, as compared to plots 74 and 76. The winglet 32 with tower strike in-scope is allowed to deflect from downstream on the suction side to upstream on the pressure side in high winds, to avoid tower strike. This deflection enables larger, therefore more efficient, operation of the winglet 32 downstream on suction side in low winds. During typical operation, the winglets 32 are rotated from downstream on the suction side in low winds to upstream on the pressure side as the wind changes to high winds, and vices versa. The winglets can be configured to be partially or fully (i.e., generally perpendicular) downstream and/or upstream.

Alternatively, at low winds the winglet 32 is oriented in the same plane as the rest of the blade 22 to capture more kinetic energy from the wind resulting in higher torque. At high winds the winglet 32 is oriented away from the tower 12 (referred to above as out-of-scope) to reduce the intensity of wingtip vortices, the resultant induced drag, and the vortex shedding induced noise. At low winds the strength of the wing tip vortex is low. The effect of this low strength wing tip vortex on the performance of the wind turbine 10 is insignificant. Accordingly, at low winds the winglets 32 that serve to arrest the wing tip vortex, may not significantly improve overall performance. Further, the additional drag of the winglets 32 may diminish the torque generated. At low winds for the winglets 32 oriented in the same plane as the rest of the respective blades 22 the ratio is 1, and for the winglets 32 oriented away from the tower 12 the ratio is 0.5. At low winds for winglets 32 oriented away from the tower 12, the increment in drag is significantly higher than the power increment. At low winds for the winglets 32 oriented in the same plane as the rest of the respective blades 22, the swept area is higher and more torque is generated. This higher torque assists in bringing down the cut-in speed, which is the speed of free stream wind at which the wind turbine 10 starts producing power, and increases the overall energy yield of the wind turbine 10. At high winds, the aerodynamic loading on the blades 22 is high and results in a strong wind tip vortex. Depending upon the free stream wind condition the winglets 32 can be partially or fully (i.e., generally perpendicular) oriented away from the tower 20 for power control. At high winds, for the winglets 32 oriented in the same plane as the rest of the respective blades 22 the ratio is 1, and for the winglets 32 oriented away from the tower 12 the ratio is 0.9. Even though the winglets 32 orientated away from the tower 12 have slightly lesser benefit than the winglets 32 oriented in the same plane as the rest of the respective blades 22, it has other benefits such as noise reduction and reduced wake width. During operation, the winglets 32 are rotated from the same plane as the rest of the blade 22 in low winds to away from the tower 12 as the wind changes to high winds, and vice-versa.

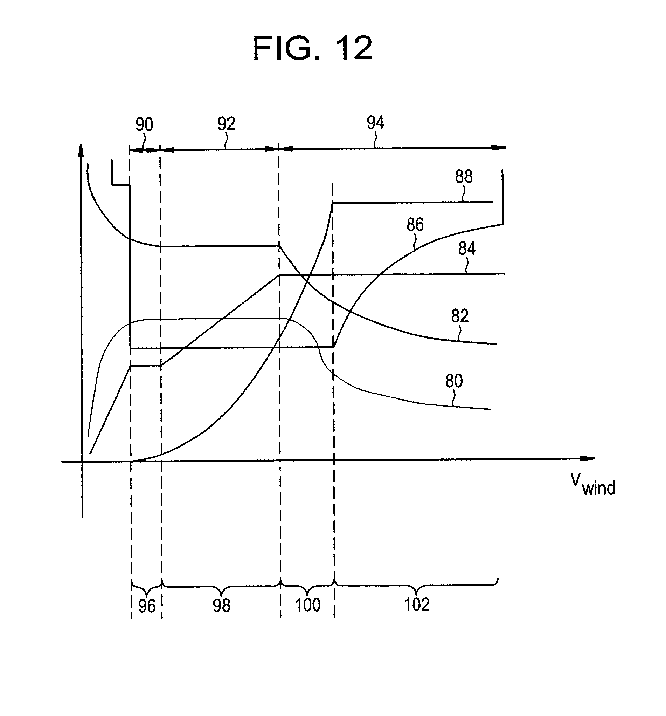

The low winds simply have a wind speed that is less than a wind speed of the high winds. A specific wind speed is not intended by low winds or high winds. What would be considered low winds and high winds is determined by the type and size (capacity) of the wind turbine, and what parameter or parameters the wind turbine is being managed to meet. Accordingly, the wind speeds at which the orientation of the winglets 32 is changed will be dictated by desired performance parameters of a specific wind turbine. What might be considered high winds in one application, such as acoustic noise reduction, could be considered low winds in another application, such as improving power generation of the wind turbine. Again, neither a specific wind speed nor range of wind speeds is intended by low winds and/or high winds. Referring to FIG. 12, a plot 80 shows Cp as a function of wind speed, a plot 82 shows TSR as a function wind speed, a plot 84 shows generator RPM as a function of wind speed, a plot 86 shows pitch as a function of wind speed, and a plot 88 shows power as a function of wind speed; for the blade 22 having the winglet 32. Regions 90 and 94 of the plots are at a constant speed, while region 92 is at a variable speed. From analysis of a region 96 it is appreciated that the winglet 32 allows for higher Cp for operating conditions outside of a design point, with no tower strike limits. The region 96 coincides with the region 90 for constant speed. From analysis of a region 98 it is appreciated that due to tower strike mitigation the blades 22 do not experience tower closeness, in other words, tower strike is not a concern. Thusly, allowing the winglet 32 to be rotated downstream on the suction side taking advantage of more efficient operation. This portion of constant TSR plot 82 and constant pitch plot 86, i.e., region 98, is the design point. The region 98 coincides with the region 92 for variable speed. From analysis of a region 100 it is appreciated that the winglet 32 allows for higher Cp for operating conditions outside of the design point, with tower strike limited. It will be appreciated that within regions 96, 98 and 100; more annual energy production is achieved at the same loads, or the same annual energy production is achieved at less loads, with the blade 22 having the winglet 32 than with a blade having a fixed winglet or no winglet at all. From analysis of a region 102 it is appreciated that the winglet 32 has the potential to yield the same power (as power is constant in this region) at a lower load or thrust. The region 102 coincides with the region 94 for constant speed.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A rotor blade of a wind turbine, comprising the rotor blade having a winglet that is configurable in response to a sensed parameter.
2. The rotor blade of clause 1 wherein the winglet is configurable as having at least one of a variable sweep angle, a variable twist angle, a variable cant angle, a variable length, a variable toe angle, and a variable radius.
3. The rotor blade of any preceding clause wherein the sensed parameter comprises at least one of wind speed, acoustic, load, acceleration, rotor speed, rotor torque, generator speed, and generator torque.
4. The rotor blade of any preceding clause wherein the winglet is configurable by morphing.
5. The rotor blade of any preceding clause the morphing comprises at least one of varying a trailing edge, rotating about an axis, elongating, changing camber, controlling a boundary layer, and altering geometry.
6. The rotor blade of any preceding clause wherein the winglet comprises a shape memory polymer or shape memory alloy.
7. The rotor blade of any preceding clause wherein the winglet comprises a smart material in a composite structure.
8. A wind turbine, comprising:
   a plurality of rotor blades for converting wind energy to rotational energy, the rotor blades having winglets that are configurable;
   a sensor for sensing a parameter and generating a sensed signal indicative of the parameter;
   a processor receptive to the sensed signal for generating an actuator signal in response thereto; and
   an actuator associated with each of the winglets for configuring the winglets in response to the actuator signal.
9. The wind turbine of any preceding clause wherein the winglets are configurable as having at least one of a variable sweep angle, a variable twist angle, a variable cant angle, a variable length, a variable toe angle, and a variable radius.
10. The wind turbine of any preceding clause wherein the sensor comprises at least one of a wind speed sensor, an acoustic sensor, a load sensor, an acceleration sensor, a rotor speed sensor, a rotor torque sensor, a generator speed sensor, and a generator torque sensor.
11. The wind turbine of any preceding clause wherein the winglets are configurable by morphing.
12. The wind turbine of any preceding clause the morphing comprises at least one of varying a trailing edge of the winglets, rotating the winglets about an axis, elongating the winglets, changing camber of the winglets, controlling a boundary layer of the winglets, and altering geometry of the winglets.
13. The wind turbine of any preceding clause wherein the winglets comprises a shape memory polymer or shape memory alloy.
14. The wind turbine of any preceding clause wherein the winglets comprises a smart material in a composite structure.
15. The wind turbine of any preceding clause wherein the actuators comprise electric actuators.
16. A method of configuring a winglet of a rotor blade at a wind turbine, comprising:
   sensing a parameter; and
   configuring the winglet in response to the parameter.
17. The method of any preceding clause wherein the configuring the winglet comprises configuring at least one of a variable sweep angle, a variable twist angle, a variable cant angle, a variable length, a variable toe angle, and a variable radius, of the winglet.
18. The method of any preceding clause wherein the parameter comprises at least one of wind speed, acoustic, load, acceleration, rotor speed, rotor torque, generator speed, and generator torque.
19. The method of any preceding clause wherein the winglet is configurable by morphing.
20. The method of any preceding clause wherein the morphing comprises at least one of varying a trailing edge, rotating about an axis, elongating, changing camber, controlling a boundary layer, and altering geometry.
21. The method of any preceding clause wherein the configuring the winglet comprises:
   at low winds configuring the winglet in about the same plane as the rest of the rotor blade; and
   at high winds configuring the winglet away from the wind turbine, where the low winds have a wind speed that is less than a wind speed of the high winds.
22. The method of any preceding clause wherein the configuring the winglet comprises:
   at low winds configuring the winglet towards the wind turbine; and
   at high winds configuring the winglet away from the wind turbine, where the low winds have a wind speed that is less than a wind speed of the high winds.
23. A method of configuring winglets of rotor blades at a wind turbine, comprising:
   at low winds orienting the winglets in about the same plane as the rest of the respective rotor blades; and
   at high winds orienting the winglets away from the wind turbine, where the low winds have a wind speed that is less than a wind speed of the high winds.
24. The method of any preceding clause wherein the orienting the winglets away from the wind turbine comprises orienting the winglets partially away from the wind turbine.
25. The method of any preceding clause wherein the orienting the winglets away from the wind turbine comprises orienting the winglets fully away from the wind turbine.
26. A method of configuring winglets of rotor blades at a wind turbine, comprising:
   at low winds orienting the winglets towards the wind turbine; and
   at high winds orienting the winglets away from the wind turbine, where the low winds have a wind speed that is less than a wind speed of the high winds.
27. The method of any preceding clause wherein the orienting the winglets towards the wind turbine comprises orienting the winglets partially towards the wind turbine.
28. The method of any preceding clause wherein the orienting the winglets away from the wind turbine comprises orienting the winglets partially away from the wind turbine.
29. The method of any preceding clause wherein the orienting the winglets towards the wind turbine comprises orienting the winglets fully towards the wind turbine.
30. The method of any preceding clause wherein the orienting the winglets away from the wind turbine comprises orienting the winglets fully away from the wind turbine.

## Claims

1. A wind turbine (10), comprising:
a plurality of rotor blades (22) for converting wind energy to rotational energy, the rotor blades (22) having winglets (32) that are configurable;
a sensor (48) for sensing a parameter and generating a sensed signal indicative of the parameter;
a processor (50) receptive to the sensed signal for generating an actuator signal in response thereto; and
an actuator (43) associated with each of the winglets (32) for configuring the winglets (32) in response to the actuator signal.

2. The wind turbine (10) of claim 1 wherein the winglets (32) are configurable as having at least one of a variable sweep angle, a variable twist angle, a variable cant angle, a variable length, a variable toe angle, and a variable radius.

3. The wind turbine (10) of any preceding claim wherein the sensor (48) comprises at least one of a wind speed sensor, an acoustic sensor, a load sensor, an acceleration sensor, a rotor speed sensor, a rotor torque sensor, a generator speed sensor, and a generator torque sensor.

4. The wind turbine (10) of any preceding claim wherein the winglets (32) are configurable by morphing.

5. The wind turbine (10) of claim 4 the morphing comprises at least one of varying a trailing edge of the winglets (32), rotating the winglets (32) about an axis, elongating the winglets (32), changing camber of the winglets (32), controlling a boundary layer of the winglets (32), and altering geometry of the winglets (32).

6. The wind turbine (10) of any preceding claim wherein the winglets (32) comprises a shape memory polymer or shape memory alloy.

7. The wind turbine (10) of any preceding claim wherein the winglets (32) comprises a smart material in a composite structure.

8. The wind turbine (10) of any preceding claim wherein the actuators (43) comprise electric actuators.
